# EUROPEAN PATENT APPLICATION

(11) **EP 2 871 172 A1**
(43) Date of publication of application: **13.05.2015**
(21) Application number: 13812697.4
(22) Date of filing: 03.07.2013
(51) Int. Cl.: C04B 35/622

(54) **METAMATERIAL AND MANUFACTURING METHOD THREFOR**

(30) Priority: 03.07.2012 CN 201210226499
(71) Applicant: Kuang-chi Innovative Technology Ltd., Shenzhen, Guangdong 518034 (CN)
(72) Inventor: LIU, Ruopeng, Shenzhen Guangdong 518034 (CN); ZHAO, Zhiya, Shenzhen Guangdong 518034 (CN); MIAO, Xigen, Shenzhen Guangdong 518034 (CN); XIONG, Xiaolei, Shenzhen Guangdong 518034 (CN)
(74) Representative: Goddar, Heinz J.
(86) International application number: PCT/CN2013/078714
(87) International publication number: WO 2014/005514

(57) **Abstract**

A manufacturing method of a metamaterial having a spatial geometric structure includes: step 1, making a first dielectric enclosure having a spatial geometric shape; step 2, making a dielectric patch having at least one conductive geometric structure; step 3, attaching at least one dielectric patch to a part or all of a surface of the first dielectric enclosure, so that the dielectric patches are spliced together to form at least one dielectric patch layer having the spatial geometric shape; and step 4, combining the first dielectric enclosure and the dielectric patch layer together.

## Description

### FIELD OF THE INVENTION

The disclosure relates to the field of metamaterials, and in particular, to a metamaterial and a manufacturing method thereof.

### BACKGROUND

When light, a type of electromagnetic wave, penetrates glass, because a wavelength of a light beam is much longer than a size of an atom, a response of the glass to the light beam may be described by using an overall parameter of the glass such as a refractive index, rather than a detail parameter of atoms constituting the glass. Correspondingly, during study of a response of a material to other electromagnetic waves, a response of any structure, which has a size much shorter than a wavelength of the electromagnetic wave, the material to the electromagnetic wave may also be described by using an overall parameter of the material, for example, a permittivity ε and a permeability µ. A structure at each point of a material may be designed so that permittivities and permeabilities at the points of the material are the same or different, so that permittivities and permeabilities of the material as a whole are arranged regularly to a certain extent, and the permeabilities and permittivities that are arranged regularly may enable the material to have a macro response to an electromagnetic wave, for example, converging electromagnetic waves, diverging electromagnetic waves, or the like. Such a material having regularly arranged permeabilities and permittivities is referred to as a metamaterial.

A basic unit of a metamaterial includes a conductive geometric structure and a substrate to which the conductive geometric structure is attached. The conductive geometric structure is preferentially a metal microstructure. The metal microstructure has a planar or stereoscopic topology structure that may respond to an electric field and/or magnetic field of an incident electromagnetic wave. A response of each basic unit of the metamaterial to the incident electromagnetic wave may be altered by changing a pattern and/or dimension of the metal microstructure of each basic unit of the metamaterial. A plurality of basic units, which are arranged regularly, of the metamaterial may enable the metamaterial to have a macro response to the electromagnetic wave.

At present, a metamaterial is made by coating a conductive geometric structure over a flat dielectric baseplate. A material of the dielectric baseplate may be a composite material or ceramics. Most baseplates of a composite material are brittle to a certain extent. When the metamaterial is widely used outdoors, because of great differences between an outdoor environment and an ideal environment in a laboratory, performance-affecting outdoor substances such as aqueous vapour may easily enter the metamaterial through gaps of the substrate, causing oxidization of an inside conductive geometric structure and/or aging of the substrate, which affects performance of the metamaterial. A ceramic baseplate has high wave-transparent performance and is resistant to high temperatures, but cannot meet high-strength performance.

### SUMMARY OF THE INVENTION

An objective of the disclosure is to provide a novel metamaterial and a manufacturing method thereof, where the metamaterial is a ceramic material.

The manufacturing method of a metamaterial according to the disclosure includes:
step 1, making a first dielectric enclosure having a spatial geometric shape;
step 2, making a dielectric patch having at least one conductive geometric structure;
step 3, attaching at least one dielectric patch to a part or all of a surface of the first dielectric enclosure to form at least one dielectric patch layer; and
step 4, combining the first dielectric enclosure and the dielectric patch layer together.

In the manufacturing method, the first dielectric enclosure is a first ceramic enclosure.

The manufacturing method includes, in step 1, further making a second ceramic enclosure having a spatial geometric shape; in step 3, enabling the second ceramic enclosure to cooperate with the first ceramic enclosure, so that the dielectric patch layer is encapsulated between the first ceramic enclosure and the second ceramic enclosure; and in step 4, sintering the first ceramic enclosure, the dielectric patch layer, and the second ceramic enclosure so that they are integrally formed.

The manufacturing method includes, in step 1, further making a second ceramic enclosure having a spatial geometric shape, and separately shaping up the first dielectric enclosure and the second ceramic enclosure; in step 3, binding the at least one dielectric patch to the first dielectric enclosure; and in step 4, combining the first dielectric enclosure to which the dielectric patch is bound and the second ceramic enclosure together.

The disclosure further provides a manufacturing method of a conformal ceramic metamaterial, where the manufacturing method includes the following steps:
a. preparing a green body, where degassing and pre-polymerization are performed on a suspension having ceramic powder and an organic system to obtain a slurry; the slurry is poured into a first mold and a mold core is inserted; and the green body is obtained by gel injection molding forming after the slurry solidifies;
b. preparing a raw ceramic plate having a conductive geometric structure, where a ceramic slurry is prepared by using ceramic powder, so as to make a raw ceramic plate by tape casting, and the conductive geometric structure is prepared on the raw ceramic plate by using a screen printing technology;
c. attaching the prepared raw ceramic plate that has the conductive geometric structure to the outer surface of the prepared green body that, so as to obtain a green body with the conductive geometric structure;
d. pouring a slurry same as that in step a into a second mold, and inserting the green body with the conductive geometric structure in step c, so that a conformal structur blank having the conductive geometric structure is obtained by gel injection molding forming after solidification at room temperature; and
e. performing degumming and sintering on the conformal structure blank having the conductive geometric structure, so as to obtain a conformal ceramic metamaterial.

Both the first mold and the second mold are two-part molds, and a diameter of the second mold is greater than a diameter of the first mold.

After the conductive geometric structure is made by screen printing on the raw ceramic plate in step b, a surface of the conductive geometric structure is coated with a layer of raw ceramic plate having the same component as that in step b.

The conformal structure blank having the conductive geometric structure is shaped at pressures between 100 to 150 MPa by using a cold isostatic pressing technology before degumming.

Inner and outer surfaces of the green body are curved surfaces.

The organic system includes a dispersant, an organic monomer, and a crosslinking agent.

An initiator and a catalyst are added to the degassed slurry, which is then stirred until uniform.

A metal that is used to make the conductive geometric structure is silver, platinum, molybdenum, or tungsten.

A conformal ceramic metamaterial includes the conformal ceramic metamaterial that is manufactured according to the foregoing methods.

A conformal ceramic metamaterial with curved surfaces that is manufactured by using a manufacturing method according to the disclosure has high wave-transparent performance and is resistant to high temperatures; because a ceramic enclosure and a dielectric patch are combined in a conformal manner, strength of the metamaterial is improved.

### BRIEF DESCRIPTION OF THE DRAWINGS

Specific characteristics and performance of the disclosure are further presented with reference to the embodiments and accompanying drawings thereof.
FIG. 1 is a schematic diagram of a raw ceramic plate that has a conductive geometric structure and is manufactured in step b according to an embodiment of the disclosure;
FIG. 2 is a schematic diagram of a conformal ceramic metamaterial manufactured according to an embodiment of the disclosure;
FIG. 3 is a block diagram of a manufacturing method of a metamaterial according to another embodiment of the disclosure;
FIG. 4 is a block diagram of a manufacturing method of a dielectric patch having a conductive geometric structure according to another embodiment of the disclosure;
FIG 5 is a vertical cross-sectional diagram of a metamaterial according to another embodiment of the disclosure;
FIG. 6 is a horizontal cross-sectional diagram of a metamaterial according to another embodiment of the disclosure;
FIG. 7 is a schematic diagram of a conductive geometric structure according to another embodiment of the disclosure;
FIG. 8 is a schematic diagram of a conductive geometric structure according to still another embodiment of the disclosure;
FIG. 9 is a block diagram of a manufacturing method of a metamaterial according to yet another embodiment of the disclosure; and
FIG 10 is a block diagram of a manufacturing method of a dielectric patch having a conductive geometric structure according to yet another embodiment of the disclosure.

### EMBODIMENTS

To make the objectives, technical solutions, and advantages of the disclosure more comprehensible, the following further specifically describes the disclosure with reference to accompanying drawings and embodiments. It should be understood that, the described specific embodiments are only used to explain the disclosure, but not to limit the disclosure.

In the following embodiments, a conductive geometric structure, in the field of metamaterials, is generally a microstructure having a specific pattern and material, and implements a modulation function on an electromagnetic wave that is at a specific frequency band and goes through the conductive geometric structure. The conductive geometric structure has substantially the same meaning as a microstructure.

### Embodiment 1

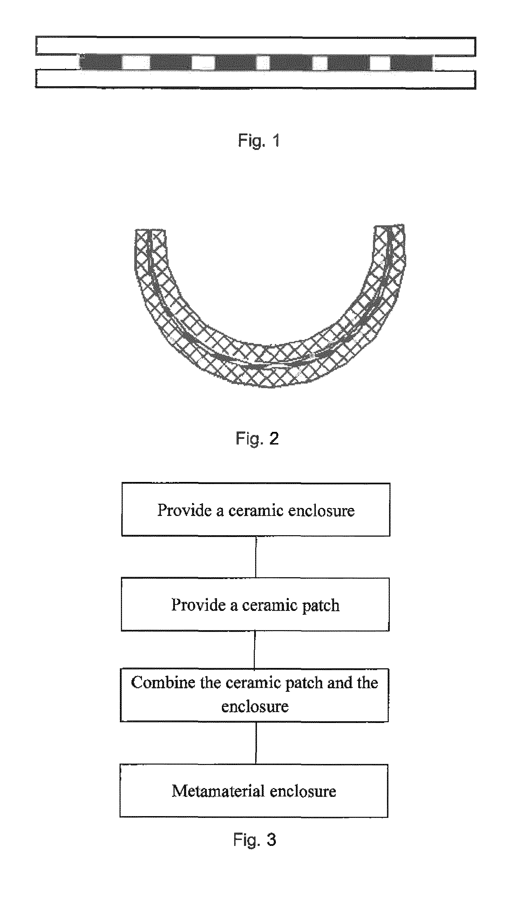

Embodiment 1 may be understood with reference to FIG. 1 and FIG. 2.

A manufacturing method of a conformal ceramic metamaterial is provided, where the manufacturing method includes the following steps.
a. A green body is prepared. Degassing and pre-polymerization are performed on a suspension having ceramic powder (for example, cordierite, aluminum oxide, a non-oxide Si3N4, or the like) and an organic system to obtain a slurry; the slurry is poured into a first mold and a mold core is inserted; and the green body is obtained by gel injection molding forming after the slurry solidifies.

A specific process is as follows: an organic monomer and a crosslinking agent are dissolved in water, and a water-soluble macromolecule is added as a dispersant, so as to make a monomer solution; then, ceramic powder is added to and thoroughly mixed in the monomer solution, an initiator and a catalyst are added after vacuum degasification, the solution is stirred until uniform, and pre-polymerization is performed to obtain a required slurry; and the obtained slurry is poured into the first mold and the mold core is inserted, so that the green body is obtained by gel injection molding forming after the slurry solidifies at room temperature, where inner and outer surfaces of the manufactured green body are curved surfaces.
b. A raw ceramic plate having a conductive geometric structure is prepared. A ceramic slurry is prepared by using the same ceramic powder as that in step a, so as to make a raw ceramic plate by tape casting, and the conductive geometric structure is prepared on the raw ceramic plate by using a screen printing technology.

The conductive geometric structure is a planar or stereoscopic structure that is made of a metal wire and has a specific geometric shape, for example, an I shape, a snowflake shape, or the like. The conductive geometric structure may be made by using the screen printing technology, or by using other technologies such as etching, diamond etching, engraving, electroetching, or ion etching. A metal that is used to make the conductive geometric structure is silver, platinum, molybdenum, tungsten, silver-palladium alloy, or the like.

Certainly, a surface of the conductive geometric structure may also be coated with a layer of raw ceramic plate of a same component, so that the conductive geometric structure is between two layers of raw ceramic plates that are made by tape casting, as show in FIG. 1, so as to improve their mechanical strength.
c. The raw ceramic plate that is prepared in step b and has the conductive geometric structure is attached to the outer surface of the green body that is prepared in step a, so as to obtain a green body with the conductive geometric structure.
d. A slurry same as that in step a is poured into a second mold, and the green body with the conductive geometric structure in step c is inserted, so that a conformal structur blank having the conductive geometric structure is obtained by gel injection molding forming after solidification at room temperature.

In the described embodiment, both the first mold and the second mold are two-part molds, and a diameter of the second mold is greater than a diameter of the first mold.
e. The conformal structure blank having the conductive geometric structure is shaped by using a cold isostatic technology (a cold isostatic pressing technology or a warm and cold isostatic pressing technology) under pressures between 100 to 150 MPa.
f. The shaped blank of the conformal structure having the conductive geometric structure is degummed and sintered, so as to obtain a conformal ceramic metamaterial, as shown in FIG. 2.
g. The manufactured conformal ceramic metamaterial undergoes processing such as cutting and grinding to obtain a product of a required shape and size. Certainly, processing steps such as cutting and grinding may also be performed after the cold isostatic pressing, because a ceramic blank may be processed more easily than sintered ceramics.

A conformal ceramic metamaterial with curved surfaces that is prepared by integrating gel injection molding forming and an LTCC or HTCC technology has high wave-transparent performance and is resistant to high temperatures; moreover, because inner and outer ceramic plates are combined in a conformal manner and the conductive geometric structure is between two ceramic plates, strength of the conformal ceramic metamaterial is improved.

### Embodiment 2

Embodiment 2 may be understood with reference to FIG. 3 to FIG. 7.

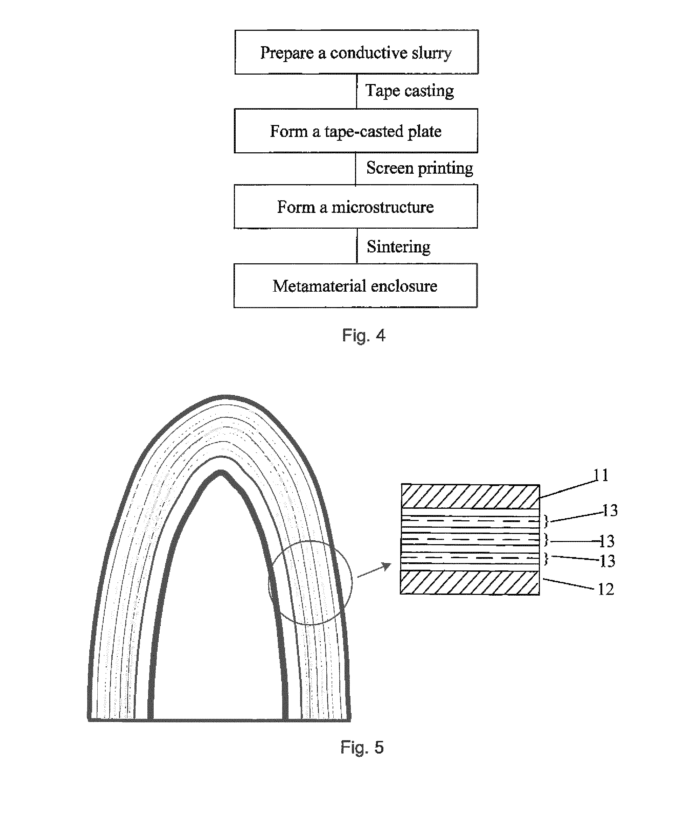

As shown in FIG. 3, a manufacturing method of a metamaterial includes step 1, providing a ceramic enclosure. The ceramic enclosure may be a common enclosure made of various ceramics, and the ceramic enclosure is of a spatial geometric structure. As shown in FIG. 5, the ceramic enclosure is divided into a first ceramic enclosure (outer enclosure) 11 and a second ceramic enclosure (inner enclosure) 12, and the ceramic enclosures 11 and 12 are of a shape of spatial curved surfaces. It should be noted that, in the structures shown in FIG. 5 to FIG. 8, these and following drawings are merely used as examples, are not drawn proportionally, and are not intended to limit the protection scope of the actual claims of the disclosure. In a preferential embodiment, the first ceramic enclosure 11 or the second ceramic enclosure 12 or both are made by slurry-pouring forming, gel-pouring forming, or cold isostatic pressing forming. In a preferential embodiment, the first ceramic enclosure 11 or the second ceramic enclosure 12 or both may also be made of fused quartz ceramics. In other embodiments of the disclosure, it is allowed to retain only one layer of ceramic enclosure, and the second ceramic enclosure 12 may be omitted.

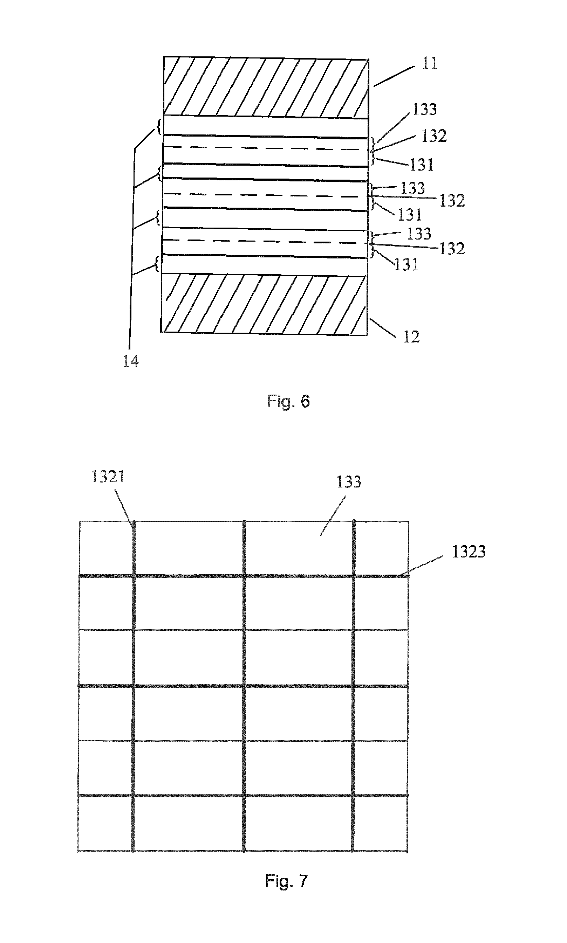

Still referring to FIG. 3, the manufacturing method of a metamaterial further includes step 2, providing a dielectric patch, where the dielectric patch has a conductive geometric structure. The conductive structure layer 132 is shown in FIG. 7. In FIG. 7, horizontal thick lines 1323 and vertical thick lines 1321 are conductive structures, and squares 1322 are dielectric substrate sheets, where the dielectric substrate sheets may be ceramic substrate sheets or substrate sheets made of other high-temperature-resistant materials. The conductive geometric structure shown in FIG. 5 is suitable for improving wave-transparent performance of the metamaterial. The conductive geometric structure according to this embodiment is not limited to the above, and may also be a conductive geometric structure that responds to an electromagnetic wave in a different manner, for example, improving wave-absorbing performance.

Reference may be made to FIG. 4 for a manufacturing method of the dielectric patch. In a specific implementation process, the manufacturing method may include a step of preparing a reinforcing material, for example, a step of preparing a quartz fiber cloth. In this step, according to a preferential embodiment, first, a fused quartz fiber cloth is selected, where the quartz fiber cloth has a plain-weave or twill-weave surface, has been saturated in silicone oil, has a silicon dioxide content of 99.95%, is resistant to temperatures up to 1200°C, and has a thickness between 0.12 mm and 0.70 mm. Next, a slurry is prepared, where anhydrous alcohol and butanone are used as mixing solvents, ball-milled fused quartz powder is added, mixing dispersants polyacrylic acid and glyceryl trioleate are added, then a bonding agent, for example, prB, and a plasticizer propanetriol are added, and the solution is stirred to make a thick slurry having good flowability. The quartz fiber may be replaced with other reinforcing materials, for example, glass fiber, aramid fiber, polyethylene fiber, carbon fiber, or polyester fiber.

Still referring to FIG. 4, the manufacturing method of the dielectric patch further includes forming a tape-casted plate. On the basis of the foregoing steps, after vacuum defoaming is performed on the slurry, tape casting is performed on a tape casting machine. In a specific implementation process, tape casting may be performed on the quartz fiber cloth to form a high-strength and highly flexible quartz-fiber-reinforced quartz powder casting tape (ceramic layer), thereby forming the ceramic substrate sheet or a ceramic layer 133 shown in FIG. 7.

Still referring to FIG. 4, the manufacturing method of the dielectric patch further includes forming a conductive geometric structure. In this step, first, a conductive slurry is prepared; then, a screen printing forme is covered over the foregoing casting tape, so as to form a plurality of patterns that are the same as the conductive geometric structure by using the screen printing forme; next, the screen printing forme is coated with the conductive slurry, and the conductive slurry penetrates mesh openings of the plurality of patterns to attach to the casting tape, and forms a conductive structure layer after solidification. The conductive structure layer may be conductive structures formed by the horizontal thick lines 1323 and vertical thick lines 1321 shown in FIG 7.

Still referring to FIG. 5 and FIG 6, in an embodiment of the disclosure, a plurality of layers of dielectric patches 13 is arranged on a part or all of an enclosure surface of the ceramic enclosure 11 or 12. The enclosure surface herein may be one surface or two surfaces.

In step 3, with reference to FIG. 3 and FIG 4, the casting tape having the conductive geometric structure is combined with the ceramic enclosures; then, the combination is sintered to form a metamaterial. In a preferential embodiment, the casting tape and the ceramic enclosure are superposed. Before the superposing, a bonding agent is coated over the enclosure surfaces of the ceramic enclosures (baseplates/substrate bodies) 11 and 12 and/or a corresponding surface of the dielectric patch. As shown in FIG. 4, the bonding agent layer 14 is in a liquid form or slurry form during bonding. In a preferential embodiment, the bonding agent is a fiber-reinforced bonding layer, where the fiber may be a glass fiber, a quartz fiber, an aramid fiber, a polyethylene fiber, a carbon fiber, or a polyester fiber. In a more preferential embodiment, the bonding agent includes a molten metal and/or non-metal oxide, for example, quartz powder, zirconium oxide, copper oxide, and silica solution, whose weight percentages are 1-20 wt%, 1-10 wt%, 1-10 wt%, and 1-5 wt%, respectively; the remaining is Al(HPO₄)₂. In another preferential embodiment, the bonding agent includes fused quartz powder, water glass, silica zirconium, and aluminum oxide, whose weight percentages are 5-35 wt%, 1-5 wt%, 5-10 wt%, and 30-40 wt%, respectively; the remaining is water. One surface of each of the ceramic enclosures 11 and 12 is attached with a flexible tape-casted plate having the conductive geometric structure; the tape-casted plates are in a blank state; it is preferred that cold isostatic pressing is performed before sintering, so that the ceramic enclosures are shaped.

In the foregoing steps, after the bonding agent is cold dried (between 80°C and 120°C), a required surface is coated with a high-temperature bonding agent slurry mixed with a quartz powder filler; before the coated slurry hardens, another ceramic enclosure or dielectric patch with or without a conductive geometric structure is attached, where a force needs to be applied during splicing so that the bonding slurry becomes solid. Low temperature baking is performed so that the bonding agent performs a curing reaction. In an embodiment of the disclosure, a chemical formula of the curing reaction below 250°C is as follows:

Zr(OH)₄+4H₃PO₄→Zr(H₂PO₄)₄+4H₂O

In order to sinter the tape-casted plate blank (having the conductive geometric structure) and improve bonding strength of the bonding agent, a temperature of a low-temperature sintering process is lower than a melting point of the conductive geometric structure, for example, 961°C.

In the foregoing embodiments, a phosphate bonding agent may be mixed with fused quartz powder, quartz short fiber, or punctured quartz fiber cloth, and a thickness of a bonding layer may be between 1 mm and 2 mm.

In the foregoing embodiments, as shown in FIG. 5 and FIG. 6, dielectric patch layers on corresponding sides of the first ceramic enclosure and/or the second ceramic enclosure are made by splicing a plurality of tape-casted plates 13, which together form a spatial geometric structure that is similar or corresponding to the shape of the first ceramic enclosure and/or the second ceramic enclosure. The spatial geometric structure is, for example, a spatial curved surface. That is, a shape of the dielectric patches matches with the shape of the surface of the corresponding side of the first or second ceramic enclosure, so that the dielectric patch layer seamlessly fits, as a whole, the surface of the side of the first or second ceramic enclosure.

### Embodiment 3

Embodiment 3 may be understood with reference to FIG. 3 to FIG. 6, and FIG. 8.

In this embodiment, component symbols and partial content of the foregoing embodiments are used, where same symbols are used to represent same or similar components, and the description of same technical content is selectively omitted. Reference may be made to the foregoing embodiments for the description of the omitted part, which is not described repeatedly in this embodiment. Reference may be made to FIG. 3, FIG. 4, FIG 5, and FIG. 6 for parts that are similar to those in Embodiment 2.

Referring to FIG 3, a manufacturing method of a metamaterial includes step 1, providing a ceramic enclosure. The ceramic enclosure may be a common enclosure made of various ceramics, and the ceramic enclosure is a spatial geometric structure. As shown in FIG. 5, the ceramic enclosure 11 is of a shape of a spatial curved surface. In a preferential embodiment, the ceramic enclosure 11 is made by slurry-pouring forming, gel-pouring forming, or cold isostatic pressing forming. In a preferential embodiment, the ceramic enclosure 11 is made of fused quartz ceramics. In other embodiments of the disclosure, on the basis of this embodiment, a second ceramic enclosure 12 similar to the structure shown in FIG 5 may be added.

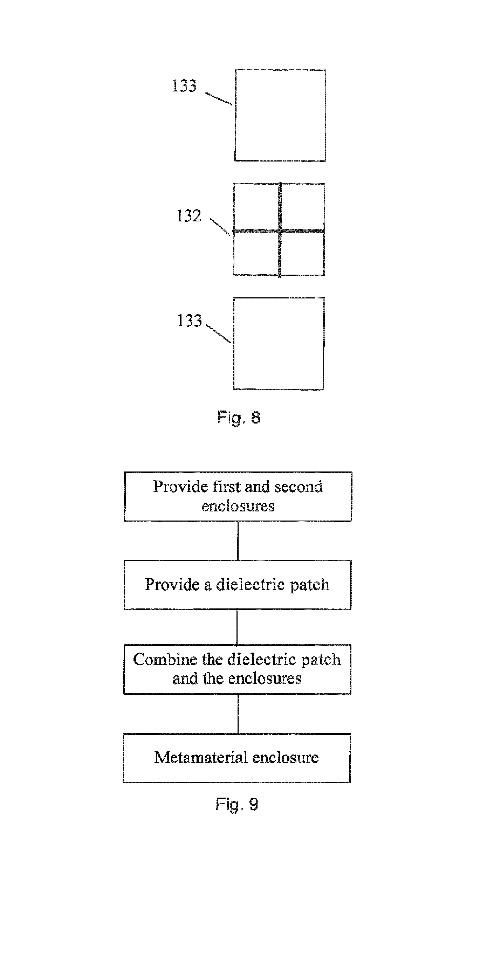

Still referring to FIG 3, the manufacturing method of a metamaterial further includes step 2, providing a dielectric patch, where the dielectric patch has a conductive geometric structure. The conductive structure layer 132 is shown in FIG. 8. In FIG. 8, a horizontal thick line and a vertical thick line of the conductive geometric structure layer 132 are conductive structures, and squares are ceramic substrate sheets. The conductive geometric structure shown in FIG. 8 is suitable for improving wave-transparent performance of the metamaterial. The conductive geometric structure according to this embodiment is not limited to the above, and may also be a conductive geometric structure that responds to an electromagnetic wave in a different manner, for example, improving wave-absorbing performance.

Reference may be made to FIG 4 for a manufacturing method of the dielectric patch. In a specific implementation process, the manufacturing method may include a step of preparing a reinforcing material, for example, a step of preparing a quartz fiber cloth. In this step, according to a preferential embodiment, first, a fused quartz fiber cloth is selected, where the quartz fiber cloth has a plain-weave or twill-weave surface, has been saturated in silicone oil, has a silicon dioxide content of 99.9%, is resistant to temperatures up to 1300°C, and has a thickness between 0.15 mm and 0.80 mm. Next, a slurry is prepared, where anhydrous alcohol and butanone are used as mixing solvents, ball-milled fused quartz powder is added, mixing dispersants polyacrylic acid and glyceryl trioleate are added, then a bonding agent, for example, prB, and a plasticizer propanetriol are added, and the solution is stirred to make a thick slurry having good flowability. The quartz fiber may be replaced with other reinforcing materials, for example, glass fiber, aramid fiber, polyethylene fiber, carbon fiber, or polyester fiber.

Still referring to FIG. 4, a manufacturing method of a dielectric patch having no conductive geometric structure further includes forming a tape-casted plate. On the basis of the foregoing steps, after vacuum defoaming is performed on the slurry, tape casting is performed on the quartz fiber cloth on a tape casting machine to form a high-strength and highly flexible quartz-fiber-reinforced quartz powder casting tape (ceramic layer), thereby forming the ceramic substrate sheet or a ceramic layer 133 shown in FIG 6.

Still referring to FIG. 4, a manufacturing method of a dielectric patch having a conductive geometric structure further includes forming a conductive geometric structure. In this step, first, a conductive slurry is prepared; then, a screen printing forme is covered over the foregoing casting tape, so as to form a plurality of patterns that are the same as the conductive geometric structure by using the screen printing forme; next, the screen printing forme is coated with the conductive slurry, and the conductive slurry penetrates mesh openings of the plurality of patterns to attach to the casting tape, and forms a conductive structure layer after solidification. The conductive structure layer may be the conductive structure layer 132 shown in FIG 8.

As shown in FIG. 5 and FIG. 6, in an embodiment of the disclosure, the dielectric patch 13 includes two ceramic layers 133 and 131, and a conductive geometric structure layer 132 is formed between the two ceramic layers 133 and 131.

Still referring to FIG. 5 and FIG. 6, in an embodiment of the disclosure, a plurality of layers of dielectric patches 13 is arranged on a part or all of an enclosure surface of the ceramic enclosure 11 or 12. The enclosure surface herein may be one surface or two surfaces.

With reference to FIG. 3, FIG 4, FIG. 5, FIG. 6, and FIG. 8, the casting tape (ceramic layer) having the conductive geometric structure, the casting tape (ceramic layer) having no conductive geometric structure, and the ceramic enclosure are combined, and then sintered to form a metamaterial. In a preferential embodiment, the casting tape (ceramic layer) in a blank state and the ceramic enclosure are superposed. Before the superposing, a bonding agent is coated over the surface of the ceramic enclosure (baseplates/substrate bodies) 11 and/or a corresponding surface of the dielectric patch. As shown in FIG. 4, the bonding agent layer 14 is in a liquid form or slurry form during bonding. In a preferential embodiment, the bonding agent is a fiber-reinforced bonding layer. In a more preferential embodiment, the bonding agent includes a molten metal and/or non-metal oxide, for example, quartz powder, zirconium oxide, copper oxide, and silica solution, whose weight percentages are 1-20 wt%, 1-10 wt%, 1-10 wt%, and 1-5 wt%, respectively; the remaining is Al(HPO₄)₂. In another preferential embodiment, the bonding agent includes fused quartz powder, water glass, silica zirconium, and aluminum oxide, whose weight percentages are 5-35 wt%, 1-5 wt%, 5-10 wt%, and 30-40 wt%, respectively; the remaining is water. One surface of the ceramic enclosure 11 is attached with a flexible tape-casted plate (ceramic layer) having the conductive geometric structure; the tape-casted plates (ceramic layers) are in a blank state; it is preferred that cold isostatic pressing is performed before sintering, so that the ceramic enclosures are shaped. As shown in FIG. 5 and FIG. 6, the whole metamaterial includes 12 layers of dielectric materials. In FIG. 6, the dielectric materials from top to bottom are the ceramic enclosure 11, the bonding agent layer 14, the ceramic layer 133 having no conductive geometric structure, the conductive geometric structure layer 132, the ceramic layer 131 having no conductive geometric structure, the bonding agent layer 14, the ceramic layer 133 having no conductive geometric structure, the conductive geometric structure 132, the ceramic layer 131 having no conductive geometric structure, the bonding agent layer 14, the ceramic layer 133 having no conductive geometric structure, the conductive geometric structure layer 132, the ceramic layer 131 having no conductive geometric structure, the bonding agent layer 14, and the ceramic enclosure 12.

In the foregoing steps, after the bonding agent is cold dried (between 80°C and 120°C), a required surface is coated with a high-temperature bonding agent slurry mixed with a quartz powder filler; before the coated slurry hardens, another ceramic enclosure or dielectric patch with or without a conductive geometric structure is attached, where a force needs to be applied during splicing so that the bonding slurry becomes solid. Low temperature baking is performed so that the bonding agent performs a curing reaction. In an embodiment of the disclosure, a chemical formula of the curing reaction below 250°C is as follows:

Zr(OH)₄+4H₃PO₄→Zr(H₂PO₄)₄+4H₂O

In order to sinter the tape-casted plate blank (having the conductive geometric structure) and improve bonding strength of the bonding agent, a temperature of a low-temperature sintering process is lower than a melting point of the conductive geometric structure, for example, 961°C.

In the foregoing embodiments, a phosphate bonding agent may be mixed with fused quartz powder, quartz short fiber, or punctured quartz fiber cloth, and a thickness of a bonding layer may be between 1 mm and 2 mm.

In the foregoing embodiments, as shown in FIG. 5 and FIG. 6, a dielectric patch layer on a corresponding side of the ceramic enclosure 11 is made by splicing a plurality of tape-casted plates 13, which together form a spatial geometric structure that is similar or corresponding to the shape of the first ceramic enclosure and/or the second ceramic enclosure. The spatial geometric structure is, for example, a spatial curved surface. That is, a shape of the dielectric patches matches with the shape of the surface of the corresponding side of the first or second ceramic enclosure, so that the dielectric patch layer seamlessly fits, as a whole, the surface of the side of the first or second ceramic enclosure.

### Embodiment 4

Embodiment 4 may be understood with reference to FIG. 5 to FIG. 7, FIG. 9, and FIG. 10.

As shown in FIG. 9, a manufacturing method of a metamaterial includes step 1, providing a first dielectric enclosure 11 and a second ceramic enclosure 12. As shown in FIG. 5, the first dielectric enclosure (outer enclosure) 11 and the second ceramic enclosure (inner enclosure) 12 are in shapes of spatial curved shapes. It should be noted that, in the structures shown in FIG. 5 to FIG. 8, these and following drawings are merely used as examples, are not drawn proportionally, and are not intended to limit the protection scope of the actual claims of the disclosure. The first dielectric enclosure 11 may be a ceramic enclosure, and a forming method thereof may be sintering. In other embodiments of the disclosure, the first dielectric enclosure 11 is a composite material, and forming the first dielectric enclosure 11 specifically includes forming the first dielectric enclosure by solidification, where the composite material is a thermoset or thermoplastic material such as polyimide, polyester, polytetrafluoroethylene, polyurethane, polyarylate, PET, PE, or PVC. These composite materials may further include a reinforcing material, where the reinforcing material is at least one of fiber, textile, or particles. For example, the reinforcing material is fiber, such as glass fiber, aramid fiber, polyethylene fiber, carbon fiber, or polyester fiber. In addition, these composite materials may be further of multi-layer structures. In a preferential embodiment, the second ceramic enclosure 12 is made by slurry-pouring forming, gel-pouring forming, or cold isostatic pressing forming. In a preferential embodiment, the second ceramic enclosure 12 may also be formed by pouring and sintering a fused quartz ceramic slurry.

Still referring to FIG. 9, the manufacturing method of a metamaterial further includes step 2, providing a dielectric patch, where the dielectric patch includes a conductive geometric structure, and the conductive geometric structure is a planar or stereoscopic structure that is made of a metal wire and has a specific geometric shape, for example, an I shape, a snowflake shape, or the like. The conductive structure layer 132 is shown in the embodiment shown in FIG 7, where horizontal thick lines 1323 and vertical thick lines 1321 are metal structures, and squares 1322 are dielectric substrate sheets. The conductive geometric structure shown in FIG. 7 is suitable for improving wave-transparent performance of the metamaterial. The conductive geometric structure according to this embodiment is not limited to the above, and may also be a conductive geometric structure that responds to an electromagnetic wave in a different manner, for example, improving wave-absorbing performance.

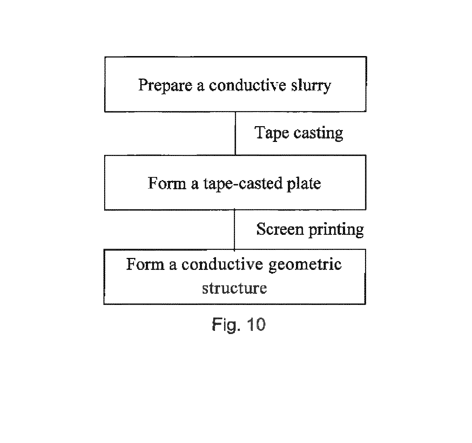

Reference may be made to FIG 10 for a manufacturing method of the dielectric patch. In a specific implementation process, the manufacturing method may include a step of preparing a reinforcing material, for example, a step of preparing a quartz fiber cloth. In this step, according to a preferential embodiment, first, a fused quartz fiber cloth is selected, where the quartz fiber cloth has a plain-weave or twill-weave surface and has been saturated in silicone oil, has a silicon dioxide content of 99.95%, is resistant to temperatures up to 1200°C, and has a thickness between 0.12 mm and 0.70 mm. Next, a slurry is prepared, where anhydrous alcohol and butanone are used as mixing solvents, ball-milled fused quartz powder is added, mixing dispersants polyacrylic acid and glyceryl trioleate are added, then a bonding agent, for example, prB, and a plasticizer propanetriol are added, and the solution is stirred to make a thick slurry having good flowability. The quartz fiber may be replaced with other reinforcing materials, for example, glass fiber, aramid fiber, polyethylene fiber, carbon fiber, or polyester fiber.

Still referring to FIG. 10, the manufacturing method of the dielectric patch further includes forming a tape-casted plate. On the basis of the foregoing steps, after vacuum defoaming is performed on the slurry, tape casting is performed on the quartz fiber cloth on a tape casting machine to form a high-strength and highly flexible quartz-fiber-reinforced quartz powder casting tape (ceramic layer), thereby forming the dielectric substrate sheet or a ceramic layer 133 shown in FIG. 5.

Still referring to FIG. 10, the manufacturing method of the dielectric patch further includes forming a conductive geometric structure. In this step, first, a conductive slurry is prepared; then, a screen printing forme is covered over the foregoing casting tape, so as to form a plurality of patterns that are the same as the conductive geometric structure by using the screen printing forme; next, the screen printing forme is coated with the conductive slurry, and the conductive slurry penetrates mesh openings of the plurality of patterns to attach to the casting tape, and forms a conductive geometric structure layer after solidification. The conductive geometric structure layer may be conductive geometric structures formed by the horizontal thick lines 1323 and vertical thick lines 1321 shown in FIG. 10.

In other embodiments of the disclosure, a substrate of the dielectric patch may also be a composite material, where the composite material is a thermoset or thermoplastic material such as polyimide, polyester, polytetrafluoroethylene, polyurethane, polyarylate, PET, PE, or PVC. These composite materials may be a single-layer or multi-layer structure including foams and/or cells. In addition, these composite materials may include a reinforcing material, where the reinforcing material is at least one of fiber, textile, or particles. For example, the reinforcing material is fiber, such as glass fiber, aramid fiber, polyethylene fiber, carbon fiber, or polyester fiber.

Besides the screen printing method descried above, the conductive geometric structure may be further formed on the composite material by etching, diamond etching, engraving, electroetching, or ion etching. A metal that is used to make the conductive geometric structure is silver, platinum, molybdenum, tungsten, silver-palladium alloy, or the like.

Still referring to FIG. 9 and FIG. 10, in an embodiment of the disclosure, a plurality of layers of dielectric patches 13 is arranged on a side surface of the first dielectric enclosure 11. The dielectric patch 13 is bonded to a part or all of surface of the first dielectric enclosure 11, so as to form at least one layer of first dielectric enclosure 11 having the dielectric patch 13.

With reference to FIG. 9 and FIG. 10, the dielectric patch having the conductive geometric structure and the first dielectric enclosure 11 are combined; then, the combination is further combined with the second ceramic enclosure together. A combination method includes but is not limited to:
binding the first dielectric enclosure 11 to which the dielectric patch 13 is bound to the second ceramic enclosure 12 by using a molten slurry; or
connecting the first dielectric enclosure 11 to which the dielectric patch 13 is bound to the second ceramic enclosure 12 by using a fastener; or
clamping the first dielectric enclosure 11 to which the dielectric patch 13 is bound to the second ceramic enclosure 12.

In a step of high-temperature pressing bonding, in order to solidify the dielectric patch blank (having the conductive geometric structure) and improve bonding strength of the bonding agent, a temperature of a low-temperature sintering process is lower than a melting point of the conductive geometric structure, for example, 961°C.

In the foregoing embodiments, as shown in FIG. 9 and FIG 10, dielectric patch layers on corresponding sides of the first dielectric enclosure 11 and/or the second ceramic enclosure 12 are made by splicing a plurality of tape-casted plates 13, which together form a spatial geometric structure that is similar or corresponding to the shape of the first dielectric enclosure and/or the second ceramic enclosure. The spatial geometric structure is, for example, a spatial curved surface. That is, a shape of the dielectric patches matches with the shape of the surface of the corresponding side of the first or second ceramic enclosure, so that the dielectric patch layer seamlessly fits, as a whole, the surface of the side of the first or second ceramic enclosure.

### Embodiment 5

Embodiment 5 may be understood with reference to FIG. 5 to FIG. 6, and FIG. 8 to FIG. 10.

In Embodiment 5, component symbols and partial content of the foregoing embodiments are used, where same symbols are used to represent same or similar components, and the description of same technical content is selectively omitted. Reference may be made to the foregoing embodiments for the description of the omitted part, which is not described repeatedly in Embodiment 5. Reference may be made to FIG. 9, FIG. 10, FIG. 5, and FIG. 6 for parts that are similar to those in Embodiment 4.

Referring to FIG 9, a manufacturing method of a metamaterial includes step 1, providing a first dielectric enclosure 11 and a second ceramic enclosure 12. As shown in FIG. 5, the first dielectric enclosure 11 is in a shape of a spatial curved surface. The first dielectric enclosure 11 may be a ceramic enclosure, and a forming method thereof may be sintering. In other embodiments of the disclosure, the first dielectric enclosure 11 is a composite material, and forming the first dielectric enclosure 11 specifically includes forming the first dielectric enclosure by solidification, where the composite material is a thermoset or thermoplastic material such as polyimide, polyester, polytetrafluoroethylene, polyurethane, polyarylate, PET, PE, or PVC. These composite materials may further include a reinforcing material, where the reinforcing material is at least one of fiber, textile, or particles. For example, the reinforcing material is fiber, such as glass fiber, aramid fiber, polyethylene fiber, carbon fiber, or polyester fiber. In addition, these composite materials may be further a single-layer or multi-layer structure including foams and/or cells. The second ceramic enclosure 12 is made by slurry-pouring forming, gel-pouring forming, or cold isostatic pressing forming. In a preferential embodiment, the second ceramic enclosure 12 is formed by pouring and sintering a fused quartz ceramic slurry.

Still referring to FIG. 9, the manufacturing method of a metamaterial further includes step 2, providing a dielectric patch, where the dielectric patch includes a conductive geometric structure, and the conductive geometric structure is a planar or stereoscopic structure that is made of a metal wire and has a specific geometric shape, for example, an I shape, a snowflake shape, or the like. The conductive structure layer 132 is in the embodiment shown in FIG. 8. In FIG. 8, a horizontal thick line and a vertical thick line of the conductive geometric structure layer 132 are metal structures, and squares are dielectric substrate sheets. The conductive geometric structure shown in FIG. 8 is suitable for improving wave-transparent performance of the metamaterial. The conductive geometric structure according to this embodiment is not limited to the above, and may also be a conductive geometric structure that responds to an electromagnetic wave in a different manner, for example, improving wave-absorbing performance.

Reference may be made to FIG. 10 for a manufacturing method of the dielectric patch. In a specific implementation process, the manufacturing method may include a step of preparing a reinforcing material, for example, a step of preparing a quartz fiber cloth. In this step, according to a preferential embodiment, first, a fused quartz fiber cloth is selected, where the quartz fiber cloth has a plain-weave or twill-weave surface and has been saturated in silicone oil, has a silicon dioxide content of 99.9%, is resistant to temperatures up to 1300°C, and has a thickness between 0.15 mm and 0.80 mm. Next, a slurry is prepared, where anhydrous alcohol and butanone are used as mixing solvents, ball-milled fused quartz powder is added, mixing dispersants polyacrylic acid and glyceryl trioleate are added, then a bonding agent, for example, prB, and a plasticizer propanetriol are added, and the solution is stirred to make a thick slurry having good flowability. The quartz fiber may be replaced with other reinforcing materials, for example, glass fiber, aramid fiber, polyethylene fiber, carbon fiber, or polyester fiber.

Still referring to FIG. 10, the manufacturing method of the dielectric patch having no conductive geometric structure further includes forming a tape-casted plate. On the basis of the foregoing step, after vacuum defoaming is performed on the slurry, tape casting is performed on the quartz fiber cloth on a tape casting machine to form a high-strength and highly flexible quartz-fiber-reinforced quartz powder casting tape (ceramic layer), thereby forming the dielectric substrate sheet or a ceramic layer 133 shown in FIG. 8. The quartz fiber may be replaced with glass fiber, aramid fiber, polyethylene fiber, carbon fiber, or polyester fiber.

Still referring to FIG 10, the manufacturing method of the dielectric patch having a conductive geometric structure further includes forming a conductive geometric structure. In this step, first, a conductive slurry is prepared; then, a screen printing forme is covered over the foregoing casting tape, so as to form a plurality of patterns that are the same as the conductive geometric structure by using the screen printing forme; next, the screen printing forme is coated with the conductive slurry, and the conductive slurry penetrates mesh openings of the plurality of patterns to attach to the casting tape, and forms a conductive geometric structure layer after solidification. The conductive geometric structure layer may be the conductive geometric structure layer 132 shown in FIG. 8.

In other embodiments of the disclosure, a substrate of the dielectric patch may also be a composite material, where the composite material is a thermoset or thermoplastic material such as polyimide, polyester, polytetrafluoroethylene, polyurethane, polyarylate, PET, PE, or PVC. These composite materials may be a single-layer or multi-layer structure including foams and/or cells. In addition, these composite materials may include a reinforcing material, where the reinforcing material is at least one of fiber, textile, or particles. For example, the reinforcing material is fiber, such as glass fiber, aramid fiber, polyethylene fiber, carbon fiber, or polyester fiber.

Besides the screen printing method descried above, the conductive geometric structure may be further formed on the composite material by etching, diamond etching, engraving, electroetching, or ion etching. A metal that is used to make the conductive geometric structure is silver, platinum, molybdenum, tungsten, silver-palladium alloy, or the like.

As shown in FIG. 5 and FIG. 6, in an embodiment of the disclosure, the dielectric patch 13 includes two ceramic layers 133 and 131, and a conductive geometric structure layer 132 is formed between the two ceramic layers 133 and 131. Outside dimension W1 of the two ceramic layers 133 and 131 may be 2.5 mm x 2.5 mm; an outside dimension W2 of the conductive geometric structure layer 132 may be 2.7 mm x 2.7 mm, and a height H1 of the conductive geometric structure may be 0.2 mm. These specific dimensions may be altered according to different design objectives, and implementation of the disclosure is not limited to the foregoing specific dimensions.

Still referring to FIG. 5 and FIG. 6, in an embodiment of the disclosure, a plurality of layers of dielectric patches 13 is arranged on a side surface of the first dielectric enclosure 11. The dielectric patch 13 is bonded to a part or all of surface of the first dielectric enclosure 11, so as to form at least one layer of first dielectric enclosure 11 having the dielectric patch 13.

With reference to FIG. 9, FIG. 10, FIG. 5, FIG. 6, and FIG. 7, the casting tape (ceramic layer) having the conductive geometric structure and the first dielectric enclosure 11 having no conductive geometric structure layer are combined with the second ceramic enclosure; then, the combination is further combined with the second ceramic enclosure together. A combination method includes but is not limited to:
binding the first dielectric enclosure 11 to which the dielectric patch 13 is bound to the second ceramic enclosure 12 by using a molten slurry; or
connecting the first dielectric enclosure 11 to which the dielectric patch 13 is bound to the second ceramic enclosure 12 by using a fastener; or
clamping the first dielectric enclosure 11 to which the dielectric patch 13 is bound to the second ceramic enclosure 12.

As shown in FIG. 5 and FIG. 6, the whole metamaterial includes 12 layers of dielectric materials. In FIG. 6, the dielectric materials from top to bottom are the first dielectric enclosure 11, the bonding agent layer 14, the dielectric patch layer 133 having no conductive geometric structure, the conductive geometric structure layer 132, the ceramic layer 131 having no dielectric patch layer, the bonding agent layer 14, the dielectric patch layer 133 having no conductive geometric structure, the conductive geometric structure layer 132, the dielectric patch layer 131 having no conductive geometric structure, the bonding agent layer 14, the dielectric patch layer 133 having no conductive geometric structure, the conductive geometric structure layer 132, the dielectric patch layer having no conductive geometric structure, the bonding agent layer 14, and the ceramic enclosure 12.

In order to solidify the dielectric patch blank (having the conductive geometric structure) and improve bonding strength of the bonding agent, a temperature of high-temperature pressing bonding is lower than a melting point of the conductive geometric structure, for example, 961 °C.

In the foregoing embodiments, as shown in FIG. 5 and FIG. 6, dielectric patch layers on a corresponding side of the ceramic enclosure 11 made by splicing a plurality of dielectric patches 13, which together form a spatial geometric structure that is similar or corresponding to the shape of the first dielectric enclosure and/or the second ceramic enclosure. The spatial geometric structure is, for example, a spatial curved surface. That is, a shape of the dielectric patches matches with the shape of the surface of the corresponding side of the first or second ceramic enclosure, so that the dielectric patch layer seamlessly fits, as a whole, the surface of the side of the first or second ceramic enclosure.

In the manufacturing process in Embodiments 4 and 5, a forming step is performed on a dielectric enclosure and a ceramic enclosure that are manufactured, so as to prevent the conductive geometric structure from gassing when the dielectric enclosure to which the dielectric patch is attached is combined with the ceramic enclosure together.

The disclosure using the foregoing preferential embodiments; however, the disclosure is not limited thereto. Any person skilled in the art may make possible alterations and modifications without departing from the spirit and scope of the disclosure. Therefore, any changes, equivalent alterations, and modifications made to the foregoing embodiments according to the technical essence of the disclosure without departing from the content of the technical solution of the disclosure shall fall within the protection scope defined by the claims of the disclosure.

## Claims

1. A manufacturing method of a metamaterial, **characterized by** comprising:
step 1, making a first dielectric enclosure having a spatial geometric shape;
step 2, making a dielectric patch having at least one conductive geometric structure;
step 3, attaching at least one dielectric patch to a part or all of a surface of the first dielectric enclosure to form at least one dielectric patch layer; and
step 4, combining the first dielectric enclosure and the dielectric patch layer together.

2. The manufacturing method according to claim 1, **characterized in that** the first dielectric enclosure is a first ceramic enclosure.

3. The manufacturing method according to claim 2, **characterized in that** step 1 further comprises making a second ceramic enclosure having a spatial geometric shape; step 3 comprises enabling the second ceramic enclosure to cooperate with the first ceramic enclosure, so that the dielectric patch layer is encapsulated between the first ceramic enclosure and the second ceramic enclosure; and step 4 comprises sintering the first ceramic enclosure, the dielectric patch layer, and the second ceramic enclosure so that they are integrally formed.

4. The manufacturing method according to claim 2 or 3, **characterized in that** in step 1, the first ceramic enclosure or the second ceramic enclosure or both are made by slurry-pouring forming, gel-pouring forming, or cold isostatic pressing forming.

5. The manufacturing method according to claim 4, before step 3, further **characterized by** comprising:
coating the surface of the first ceramic enclosure and a corresponding surface of the second ceramic enclosure, and/or a corresponding surface of the dielectric patch with a bonding agent; and
correspondingly, after the cold isostatic pressing processing, further comprising:
heating the first ceramic enclosure and/or the second ceramic enclosure so that the bonding agent reacts to cure.

6. The manufacturing method according to claim 2 or 3, **characterized in that** in step 1, the first ceramic enclosure or the second ceramic enclosure or both are made of fused quartz ceramics.

7. The manufacturing method according to claim 3, **characterized in that** a substrate sheet of the dielectric patch is ceramics.

8. The manufacturing method according to claim 7, **characterized in that** a manufacturing method of one dielectric patch comprises:
preparing a ceramic slurry;
forming a ceramic layer by using the ceramic slurry;
forming, on the ceramic layer, a conductive structure layer having the conductive geometric structure; and
forming another ceramic layer on the conductive structure layer.

9. The manufacturing method according to claim 8, **characterized in that** before the forming a ceramic layer by using the ceramic slurry, the method further comprises:
adding a reinforcing material to the ceramic slurry.

10. The manufacturing method according to claim 8 or 9, **characterized in that** the ceramic layer is a ceramic blank layer formed by tape casting.

11. The manufacturing method according to claim 8, **characterized in that** the forming, on the ceramic layer, the conductive structure layer having the conductive geometric structure specifically comprises:
preparing a conductive slurry;
covering the ceramic layer with a screen printing forme, wherein the screen printing forme forms a plurality of patterns that are the same as the conductive geometric structure; and
coating the screen printing forme with the conductive slurry, wherein the conductive slurry penetrates mesh openings of the plurality of patterns of the screen printing forme to attach to the ceramic layer, and forms the conductive structure layer after solidification.

12. The manufacturing method according to claim 2, **characterized in that** before the attaching the at least one dielectric patch to a part or all of the surface of the first ceramic enclosure, coating the surface of the first ceramic enclosure and/or a corresponding surface of the dielectric patch with a bonding agent before attaching the at least one dielectric patch to the surface of the first ceramic enclosure.

13. The manufacturing method according to claim 5, before step 3, further **characterized by** comprising:
coating the surface of the first ceramic enclosure on one side and the corresponding surface of the second ceramic enclosure, and/or the corresponding surface of the dielectric patch with a bonding agent; and
correspondingly, after the cold isostatic pressing processing, further comprising:
baking the first ceramic enclosure and/or the second ceramic enclosure so that the bonding agent reacts to cure.

14. The manufacturing method according to claim 2, **characterized in that** the spatial geometric shape is a spatial curved surface.

15. The manufacturing method according to claim 1, **characterized in that** step 1, further comprises making a second ceramic enclosure having a spatial geometric shape, and separately forming the first dielectric enclosure and the second ceramic enclosure;
step 3 comprises binding the at least one dielectric patch to the first dielectric enclosure; and
step 4 comprises combining the first dielectric enclosure to which the dielectric patch is bound and the second ceramic enclosure together.

16. The manufacturing method according to claim 15, **characterized in that** the first dielectric enclosure is a ceramic enclosure; and
forming the first dielectric enclosure specifically comprises: performing slurry-pouring forming, gel-pouring forming, or cold isostatic pressing forming.

17. The manufacturing method according to claim 15 or 16, **characterized in that** a substrate base of the dielectric patch is ceramics, and a manufacturing method of the dielectric patch comprises:
preparing a ceramic slurry;
forming a first ceramic layer by using the ceramic slurry;
forming, on the first ceramic layer, a conductive structure layer having at least one conductive geometric structure; and
forming a second ceramic layer on the conductive structure layer.

18. The manufacturing method according to claim 17, **characterized in that** before the forming a first ceramic layer by using the ceramic slurry, the method further comprises:
adding a reinforcing material to the ceramic slurry, wherein the reinforcing material is at least one of fiber, textile, or particles.

19. The manufacturing method according to claim 17, **characterized in that** the first ceramic layer and the second ceramic layer are ceramic blank layers formed by tape casting.

20. The manufacturing method according to claim 17, **characterized in that** the forming a conductive structure layer on the first ceramic layer comprises:
preparing a conductive slurry;
covering the first ceramic layer with a screen printing forme, wherein the screen printing forme forms a pattern that is same as the conductive geometric structure; and
coating the screen printing forme with the conductive slurry, wherein the conductive slurry penetrates mesh openings of the pattern of the screen printing forme to attach to the first ceramic layer, and forms the conductive geometric structure layer.

21. The manufacturing method according to claim 17, **characterized in that** the combining the first dielectric enclosure to which the dielectric patch is bound and the second ceramic enclosure together specifically comprises:
binding the first dielectric enclosure to which the dielectric patch is bound to the second ceramic enclosure by using a slurry; or
connecting the first dielectric enclosure to which the dielectric patch is bound to the second ceramic enclosure by using a fastener; or
clamping the first dielectric enclosure to which the dielectric patch is bound to the second ceramic enclosure.

22. The manufacturing method according to claim 15, **characterized in that** the first dielectric enclosure is a composite material, and forming the first dielectric enclosure specifically comprises:
forming the first dielectric enclosure by solidification.

23. The manufacturing method according to claim 22, **characterized in that** the composite material is a thermoset or thermoplastic material.

24. The manufacturing method according to claim 22, **characterized in that** the composite material is a single-layer or multi-layer structure comprising foam and/or cells.

25. The manufacturing method according to claim 15, **characterized in that** a substrate of the dielectric patch is a composite material, and the composite material is a thermoset or thermoplastic material.

26. The manufacturing method according to claim 25, **characterized in that** the composite material comprises a reinforcing material, and the reinforcing material is at least one of fiber, textile, or particles.

27. The manufacturing method according to claim 25, **characterized in that** the conductive geometric structure on the dielectric patch is formed on the composite material by etching, diamond etching, engraving, electroetching, or ion etching.

28. The manufacturing method according to claim 25, **characterized in that** the binding the at least one dielectric patch to the first dielectric enclosure specifically comprises:
binding the dielectric patch to a part or all of surface of the first dielectric enclosure, so as to form at least one layer of first dielectric enclosure having the dielectric patch.

29. The manufacturing method according to claim 28, **characterized in that** after the binding the at least one dielectric patch to the first dielectric enclosure, the method further comprises:
forming a composite material layer on the surface of the first dielectric enclosure, which has the dielectric patch, wherein the composite material layer has a conductive geometric structure.

30. The manufacturing method according to claim 25, **characterized in that**
the combining the first dielectric enclosure to which the dielectric patch is bound and the second ceramic enclosure together specifically comprises:
binding the first dielectric enclosure to which the dielectric patch is bound to the second ceramic enclosure by using a composite material, wherein the composite material is a thermoset or thermoplastic material; or
connecting the first dielectric enclosure to which the dielectric patch is bound to the second ceramic enclosure by using a fastener; or
clamping the first dielectric enclosure to which the dielectric patch is bound to the second ceramic enclosure.

31. The manufacturing method according to claim 15, **characterized in that** the spatial geometric shape is a spatial curved surface.

32. A metamaterial, **characterized by** the metamaterial is manufactured by using any one of the manufacturing methods according to claims 1 to 31.
